# EUROPEAN PATENT APPLICATION

(11) **EP 2 527 247 A1**
(43) Date of publication of application: **28.11.2012**
(21) Application number: 10843778.1
(22) Date of filing: 20.01.2010
(51) Int. Cl.: B64C 3/44, F03D 1/06

(54) **BLADE WITH A VARIABLE PROFILE AND SHAPE**

(71) Applicant: Soluciones Energeticas, S.A., 28021 Madrid (ES)
(72) Inventor: VELA VICO, Antonio, E-28021 Madrid (ES); GANDIA AGÜERA, Fernando, E-28021 Madrid (ES); RODRIGUEZ SEVILLANO, Angel, E-28021 Madrid (ES); BARCALA MONTEJANO, Miguel A., E-28021 Madrid (ES)
(74) Representative: Urizar Anasagasti, Jesus Maria
(86) International application number: PCT/ES2010/070027
(87) International publication number: WO 2011/089277

(57) **Abstract**

Blade with variable profile and shape, having a profile (11) manufactured in a flexible material, provided internally with two parallel holes (13) stretching along the entire length of the blade (1), in which bars (2) are fixed, which, when twisted, cause a variation in the shape of the blade (1) and therefore in its aerodynamic features. This blade can work as a variable pitch blade for propellers, with the possibility of being positioned in a flag arrangement; wing, semiwing or aileron, whose profile and shape may vary, forcing a bending of the area closest to its trailing and/or leading edge towards the blade's intrados or extrados, or by means of a diagonal bending of its furthest part or its intermediate part towards the intrados and/or the extrados; o by means of the multiple and combined variation of several bars to obtain various camber movements of the blades.

## Description

### Object of the invention

Blades traditionally used in propellers, wings, semiwings or ailerons are fixed-section blades and are derived, to a large extent, from the profiles designed by NACA (National Advisory Committee for Aeronautics) in its journey towards the manufacturing of wing profiles allowing aircraft to reach the speed of sound and even higher Mach numbers.

The purpose of the blade presented in this invention is to provide an efficient and simple solution to classical aerodynamics and propulsion problems, contributing with the following innovations:
- As a wing, semiwing or aileron with a variable profile and shape through the modification of the area closest to the trailing or leading edge, its behaviour is equivalent to a conventional wing, with the advantage of having flaps and slats integrated, which allow controlling the support and minimizing aerodynamic resistance in all flight conditions.
- As one of the variations in the shape of the tip of the blade and/or an intermediate area thereof, by bending this area, a wing is obtained allowing camber movements thanks to said bending.
- If the last two possibilities are combined, a wing whose profile and shape can be modified in complex ways is obtained, allowing manoeuvres and acrobatics hitherto unforeseen and saving fuel by means of an optimal configuration in each phase of flight.
- Installed in a variable pitch propeller mode, this blade can be coupled as a propeller component in aerogenerators, engines, rotors or other devices by means of a simple mechanism turning it into a variable pitch blade, allowing aerogenerators to maintain a constant rotational speed, regardless of the higher or lower pressure exercised by the prevailing wind, until it reaches a flag position; this circumstance allows stopping the aerogenerator without having to use additional braking mechanisms, in the case of very strong or hurricane winds, or, when used in engines, rotors or other propulsion devices, it allows modifying thrust force by varying the propeller's pitch and maintaining their revolutions constant.

### Background of the invention

Aerodynamic elements with an external coating, deformable transversally along the direction of the current, are known and have been described in the following documents: US-3179357, US-3716209, US-3987984 and US-4349169. In turn, document EP-0860355 describes an aerodynamic element, such as, for example, a landing flap, a wing, an elevator or a direction rudder with an external coating, deformable transversally along the direction of the current which, in its basic structure, resembles a wing known as having a fixed external shape, but, in this case, the reinforcing struts do not result in a complete stress of each rib, but allow a deformation of the ribs' external belt, which is consciously flexible, firmly connecting, in this case, the ribs to the external coating in order to enable the external coating to follow all of the ribs' curve changes in their entirety.

### Description of the invention

In the aforementioned documents, the blade's change of section occurs in an uniform manner lengthwise, since it is about extending or narrowing its section by following a longitudinal plane defined by a specific reinforcement, which leans down or gets longer to change the blade's width and curvature along the entire length thereof, reason why its only purpose is to incorporate the flaps and slats to the blade itself. A precise deformation cannot be obtained, such as, for example, deformations that affect only the tip of the blade, or camber or mixed deformations, that is to say, making the tip of the blade lean down by having flaps and slats integrated.

This invention consists of a blade with a new profile, manufactured with a flexible composite plastic material by means of a procedure known as pulltrusion. Any other material and manufacturing process that satisfy the required flexibility and sturdiness requirements may be used.

The profile of this blade presents at least two parallel holes, sectioned like bars or tubes, with which the blade's shape can be modified. These holes cover the entire length of the blade and house those bars; they can be, in turn, enveloped, or not, with a hollow tube serving as reinforcement and guide for the bars or tubes generating the variations in the blade's shape or aerodynamic surface by being subjected to twisting.

The bars used may be solid or be tubes of any section. The respective holes covering the blade's length and used to house these bars or tubes must correspond with the shapes to be used.

Fixing these bars with their respective housings and/or coating tubes inside the blade can be carried out by means of industrial adhesives, by means of grooves made on the bars and on their respective housings or by means of any other bridle or mechanical joint system that may be convenient to use in this invention.

By applying torque by means of any mechanism, to one, to both and/or to the coating tubes, the variations in the blade's geometry and profile needed to modify its aerodynamic features can be produced. The different variations in the blade's shape and profile are the following:
- Modification by bending towards the intrados or extrados of the closest area to the blade's trailing edge and along its entire length, or to an intermediate area, caused by the application of a twisting force to the bar closest to said trailing edge. Both or more bars will be joined together to their respective housings, even though only one of them, the one corresponding to the trailing edge, will be subjected to the twisting force.
- Modification by bending towards the intrados or extrados of the closest area to the blade's leading edge and along its entire length, or to an intermediate area, caused by the application of a twisting force to the bar closest to said leading edge. Both or more bars will be joined together to their respective housings, even though only one of them, the one corresponding to the leading edge, will be subjected to the twisting force.
- Modification by means of diagonal bending towards the intrados or extrados of the furthest part of the blade, corresponding to the blade's trailing edge, caused by the application of a twisting force to the blade closest to said trailing edge. A coating tube, jointly fixed to the housing closest to the blade's trailing edge, may be used. The bar introduced into this tube will be rigidly fastened to the blade only by its final section, so that the twisting force applied is only transmitted to said section. If a coating tube is not used, the bar will likewise be fixed only by its final section.
- Modification by means of diagonal bending towards the intrados or extrados of the furthest part of the blade, corresponding to the blade's leading edge, caused by the application of a twisting force to the blade closest to said leading edge. A coating tube, fixed together to the housing closest to the blade's leading edge, may be used. The bar introduced into this tube will be rigidly fastened to the blade only by its end extremity, so that the twisting force applied is only transmitted to said extremity. If a coating tube is not used, the bar will likewise be fixed only by its end extremity.
- Combined modification, by bending towards the intrados or extrados of the areas closest to the blade's trailing and leading edges and along its entire length, caused by the application of both twisting forces to each one of the two bars, the one located closest to the leading edge and the one located closest to the trailing edge.
- Combined modification, by bending towards the intrados or extrados of the areas closest to the blade's trailing and leading edges and along its entire length, or to an intermediate area, caused by the application of twisting forces to each one of the two or more bars, the one located closest to the leading edge and the one located closest to the trailing edge.
- Modification of the blade's geometry and profile by means of any combination of the previous bendings, by applying a twisting force on both, the bars and the coating tubes of their respective housings.

### Application of the invention

This blade has multiple applications; namely:
● Aerogenerators: may replace existing classical blades, improving the behaviour thereof or may intervene as components in the design of more advanced new models.
● Aeronautics: allows the manufacturing of new aircraft designs, capable of manoeuvres and acrobatics hitherto impossible to perform, by controlling the support and optimization of the produced aerodynamic resistance in all flight conditions. This invention may have the following uses, among others:
   a) Blade for the manufacturing of fixed or variable pitch propellers in propulsion elements.
   b) Wings or semiwings incorporating all the functionalities of flaps and slats in one single piece, to be used in gliders, single-engine aircraft, multi-engine aircraft, manned or unmmaned (UAVs) or on any other aerodynamic surface of an aerial vehicle, such as Winglets, Winglets, Wingtips, etc.
   c) Leading or exit edge (flaps, slats...) or braking edge (spoilers/aerodynamic brakes) slat surfaces.
   d) Control surfaces (direction rudders, elevators, ailerons, etc.).
   e) In engine air-cooling regulation systems (Cowl flaps).
   f) In helicopters, as components of the main rotor and the tail (cyclic and collective control).
● Shipbuilding industry: as hydrodynamic control elements in submarines, hydrofoil support sets, Hovercraft direction systems, etc.
● Motoring: may be assembled as ailerons, aerodynamics compensators, etc.
● Mechanical-eolian pumping to extract water from wells. As components of the eolian driving element.
● Industrial fans with flow control, incorporated in the blades themselves.
● Wind tunnels.

### Description of the figures

To complete the description being made and with the purpose of facilitating the comprehension of the figures of the invention, a group of drawings accompany this specification in which, by way of illustration and not by way of limitation, the following is represented:

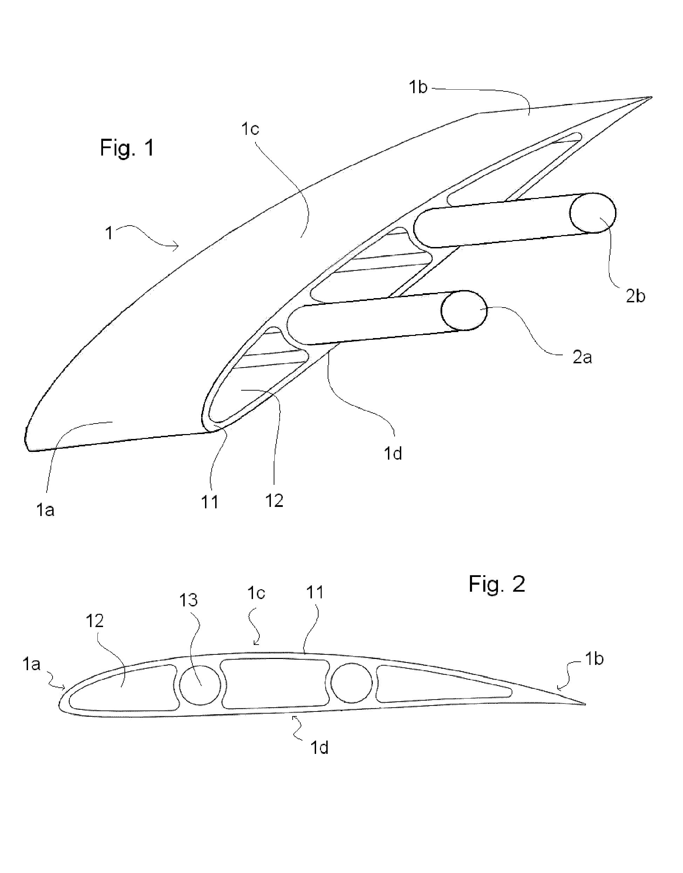

- Figure 1: perspective of the blade with the control bars located in their respective housings.
- Figure 2: Profile of the blade in its normal state, without being subjected to stress.
- Figures 3 and 4: views of the modifications suffered by the area closest to the blade's trailing edge, along its entire length, when behaving as a wing, semiwing or aileron, and the corresponding bar is subjected to twisting forces to the left or to the right.
- Figures 5 and 6: views of the modifications suffered by the area closest to the blade's leading edge, along its entire length, when behaving as a wing, semiwing or aileron, and the corresponding bar is subjected to twisting forces to the left or to the right.
- Figures 7 and 8: views of the bending experienced by the blade's extremity corresponding to the trailing edge, when the corresponding bar is subjected to twisting forces to the right and to the left.
- Figures 9 and 10: views of the bending experienced by the blade's extremity corresponding to the leading edge, when the corresponding bar is subjected to twisting forces to the right and to the left.
- Figure 11: perspective of the blade showing the housings' torsion bars and tubings (which may exist or not).
- Figure 12: Perspective of the blade showing concentric torsion bars in a single housing, influencing several distinct areas along the blade.

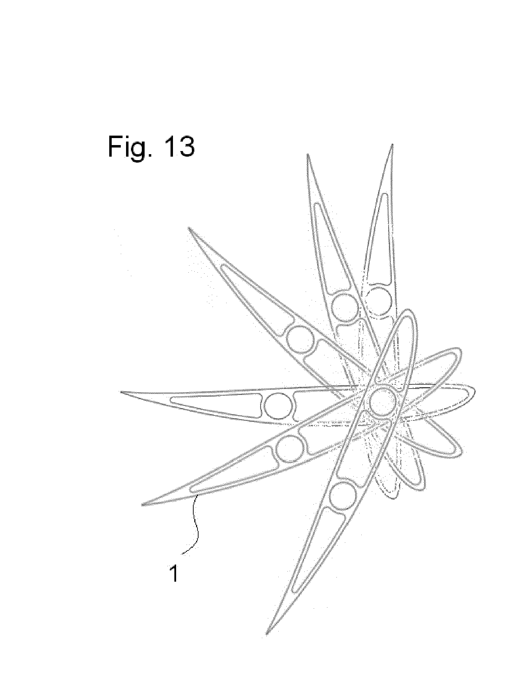

- Figure 13: static animation representing the blade's movement when installed as a variable pitch propeller blade.

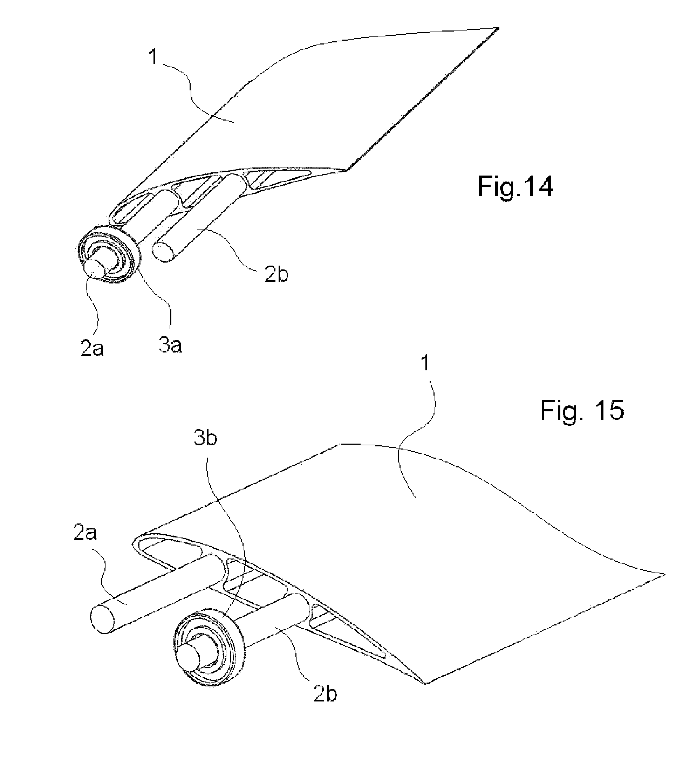

- Figure 14: the blade in its variable pitch blade configuration, being able to move around a rotating element located on the bar adjacent to the leading edge, when subjected to forces.
- Figure 15: the blade in its variable pitch blade configuration, being able to move around a rotation element located on the bar adjacent to the trailing edge, when subjected to forces.

### Preferred embodiment of the invention

The blade (1) of the invention is manufactured from a flexible plastic material by means of a procedure known as pulltrusion. This material has been chosen for the manufacturing of prototypes, but it may be any other that meets the hardness, flexibility and resistance requirements required by this invention. Likewise, the manufacturing process, pulltrusion, may be different according to the material chosen to build the blade.

The body making up the blade (1) is made up by a continuous profile (11), providing an aerodynamic shape similar to the conventional one, as long as said shape is not modified by virtue of the mechanisms implemented in the present invention. Internally, this profile (11) defines a hole (12) and a series of structural mid-walls defining at least two parallel channels or housings (13) stretching along the entire blade.

Two bars (2) having a circular section or any other appropriately-shaped section (may be square, hexagonal, etc.) are placed inside along the entire length of the blade and placed in the two housings (13) provided for that purpose, for them, during the manufacturing process. These housings may be enveloped in turn, by a hollow tube (4) or not, to serve as guides for the bars and which may be, in turn, subjected to twisting forces.

The fixing of these bars (2) to their respective housings and/or coating tubes inside the blade may be carried out by using industrial adhesives, by means of grooves made on the bars and on their respective housings or by means of any other bridle or mechanical joint system that may be convenient to use in this invention.

According to the intended functionality of the blade, the fixing of the bars inside their respective housings or coating tubes is carried out as follows:

### 1.- Blade to be used as a wing, semiwing, or aileron:

### 1.1 Wing or semiwing with flaps and slats functions integrated in one single body.

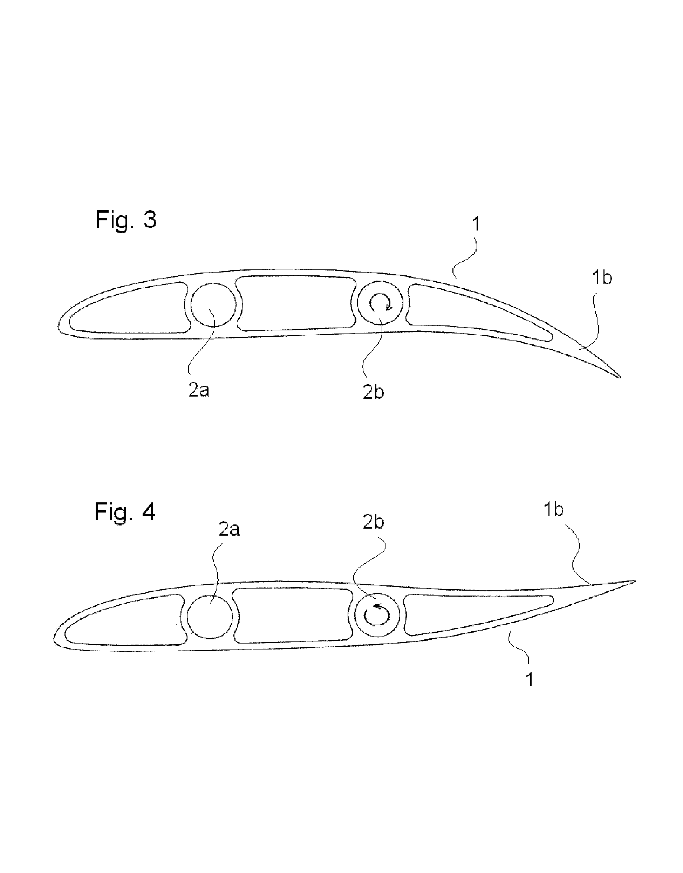

In order for the blade to behave this way, the two bars (2) are placed inside their housings (13), located along the entire length of the blade (1) and are joined together with them by means of any of the aforementioned systems. If a twisting force is applied to bar (2b), located on the side closest to the trailing edge (1b), the area of the blade closest to said trailing edge rotates, so this area acts as flaps that can be pulled down at different angles in a continuous manner (see Fig. 3 y 4).

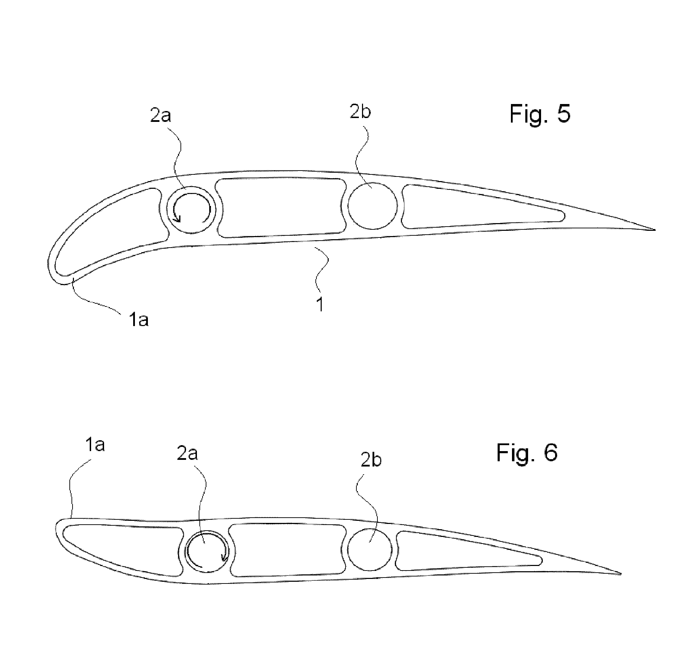

If the twisting force is applied to the other bar (2a), that is to say, to the one located closest to the leading edge (1 a), the area of the blade closest to said trailing edge rotates, so this area acts as a slats that can be pulled down at different angles in a continuous manner (see Fig. 5 y 6).

### 1.2 Wing or semiwing with camber capacity by means of the modification of the geometry of its end part.

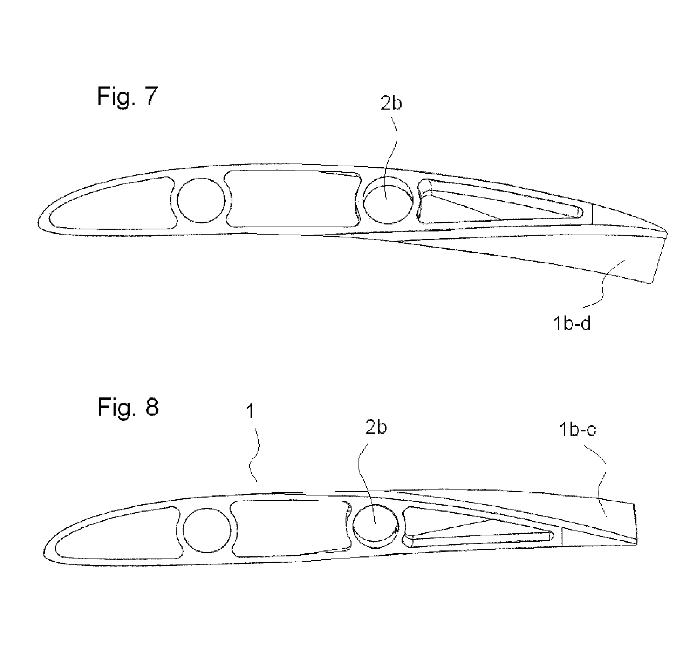

In order to produce this behaviour, the bar (2a) closest to the leading edge (1 a) is placed in its housing (13) and is fixed rigidly therein. The other bar (2b), the one corresponding to the trailing edge (1 b) is introduced into its housing, previously enveloped with a hollow tube, and is rigidly fastened to the blade's end. By means of the application of a twisting force to this last bar, the bending of the extremity of the blade in one direction or another is obtained, producing a camber movement (see Fig. 7 y 8).

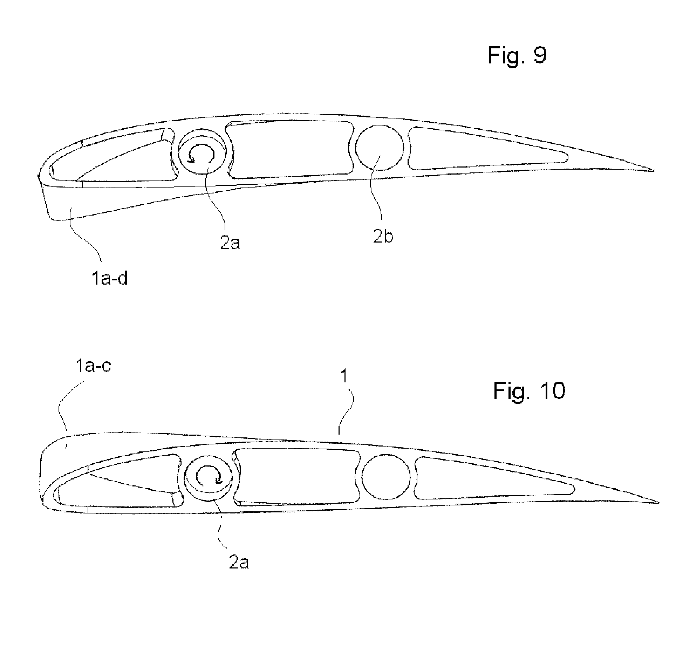

If bar (2b), corresponding to the trailing edge, is placed in its housing, rigidly fixed therein, and the bar (2a), located in the housing closest to the leading edge (1 a) is enveloped with a hollow tube or in such a way that it is able to rotate in its housing (13), except at the extremity of the blade, where it is rigidly fastened thereof, the bending of the extremity of the blade in one direction or another is obtained, producing a camber of the blade's leading edge end, as observed in Figures 9 and 10.

### 2.- Blade with combined geometry modifications

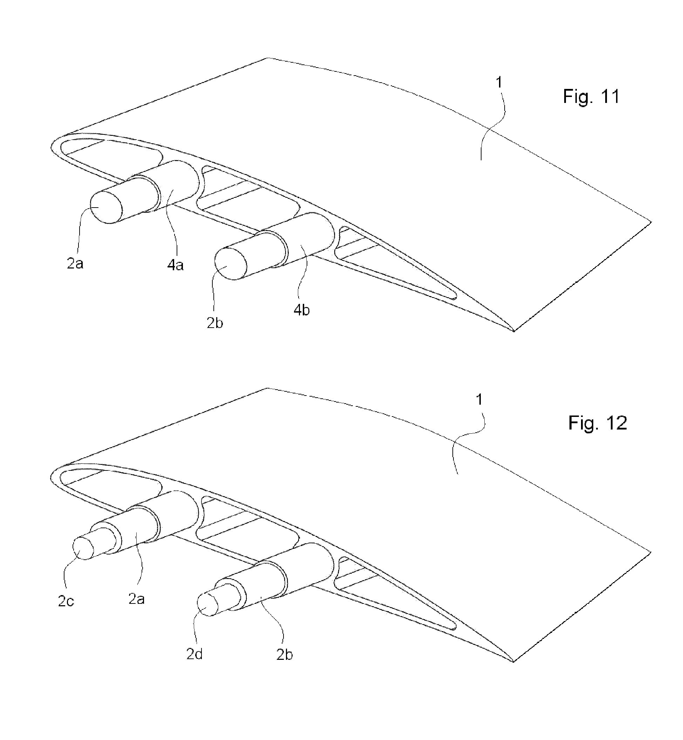

Multiple geometry modifications of the blade's profile and shape can be obtained for any other use by combining all of the aforementioned bendings. Figure 11 shows a blade in which the bars (2a-2b) are tubed in the elements (4a-4b) respectively, located in the housings (13), so that twisting forces can be applied jointly to the bars and the tubes (4) covering the housings and the bars (2) stretching along its inner part and which are joined to the blade by one of their extremities only.

Figure 12 shows an embodiment in which, in addition to being tubed, the bars (2) are several concentric bars rotating together and therefore each one of them rotates independently from the rest; in addition, they are joined at different points along the blade (1), for example, bar (2c) is joined at the extremity of the blade, the bar (2a) at an intermediate area near the extremity, and the tubing (4a) on the front area, so that, depending on which bar or bars are rotated and according to the rotating direction of each one, various aerodynamic shapes can be obtained, allowing acrobatics hitherto unforeseen.

### 3.- Blade for the manufacturing of propellers:

3.1 Fixed pitch propellers: the two bars are fixed to their respective housings permanently. Each blade is placed on the propeller in an appropriate number (three, four, etc.) with a fixed pitch angle.

3.2 Variable pitch propellers: this functionality can be obtained in two ways:
a) By fixing the two bars to their respective housings permanently and by placing each blade on the propeller in such a way that the extremity of one of the two bars remains coupled inside a bearing (3), bush or similar, anchored to the propeller's rotating plate; by applying a force to the other bar, the desired pitch angle is obtained.
b) By fixing the two bars to their respective housings permanently and by placing each blade on the propeller in such a way that both bars are placed on the propeller's plate. By applying a twisting force to one of the two bars, its profile is modified so that the blade presents a variable effect in the face of the wind, as needed.

In all the cases a control over the aerodynamic force acting on the blade is obtained, which allows reducing the structural stress level, minimizing vibrations and therefore typical structural fatigue problems. It also allows reducing the level of acoustic emissions with aerodynamic origin, thus resulting in a lower energetic and acoustic environmental impact.

## Claims

1. Blade with variable profile and shape, **characterized in that** it presents a profile (11), manufactured in a flexible material, internally provided with a series of structural mid-walls, defining at least two parallel holes (13) stretching along the entire length of the blade (1), sectioned according to bars or tubes (2) fixed in at least one specific area or along the entire blade by means of a mechanical junction system, so that, by applying a twisting movement on at least one of said longitudinal bars (2), a modification of the shape of the blade, and therefore its aerodynamic features, is obtained.

2. Blade, according to claim 1, **characterized in that** the profile (11) thereof is manufactured in a plastic material, using a pulltrusion procedure to obtain a flexible compound satisfying the required flexibility and sturdiness requirements.

3. Blade, according to claim 1, **characterized in that** the bars (2) are joined together along the entire length of the respective housing (13) so that, when twisted to the left or to the right, the bar (2b), located closest to the trailing edge (1b), or the bar (2a), closest to the leading edge (1 a) of the blade (1), when the blade works as a wing, semiwing or aileron, behaves like a wing incorporating the flaps and slats in the blade itself.

4. Blade, according to claim 1, **characterized in that** the bars (2) are tubed or may rotate along the respective housing (13), being joined to the blade only on the extremity area thereof, so that, when twisted to the left or to the right, the bar (2b), located closest to the trailing edge (1 b), or bar (2a), closest to the leading edge (1 a) of the blade (1), when behaving like a wing, semiwing or aileron, causes a bending of the blade's extremity and a camber of the group thereof.

5. Blade, according to claim 1, **characterized in that** inside each housing (13), several bars (2) are placed, both inside the housing located closest to the trailing edge (1 b) and the one closest to the leading edge (1 a) of blade (1), which are joined together to said housing on different areas of the blade, with one of them preferably fixed along the blade and the other one in the same channel (13) at the extremity of the blade so that, when the corresponding bar twists to the left or to the right, behaving as a wing, semiwing or aileron, it causes a camber along it with an irregular variation of the blade's geometry, being able to adopt multiple aerodynamic positions.

6. Blade, according to claim 1, **characterized in that** the two bars (2) are fixed to their respective housings (13) in a permanent manner and each blade is placed on the propeller, in such a way that the extremity of one of the two bars remains coupled inside a bearing (3), bush or similar, anchored to the propeller's rotating plate; by applying force to the other bar, the blade's pitch angle is modified when it operates as a propeller.

7. Blade, according to claim 1, **characterized in that** the two bars (2) are fixed to their respective housings (13) in a permanent manner and each blade is placed to form a propeller, so that both bars (2) are located on the propeller's plate so that, by applying a twisting force to one of the two bars, its profile is modified so that the blade presents a variable effect in the face of the wind.
